# EUROPEAN PATENT SPECIFICATION

(11) **EP 3 038 086 B1**
(45) Date of publication and mention of the grant of the patent: **17.07.2019**
(21) Application number: 15201961.8
(22) Date of filing: 22.12.2015
(51) Int. Cl.: G09G 3/20, G06F 1/04, G06F 1/10, G09G 3/3275

(54) **CONTROLLER SOURCE DRIVER IC, DISPLAY DEVICE, AND SIGNAL TRANSMISSION METHOD THEREOF**
STEUERUNGSQUELLENTREIBER-IC, ANZEIGEVORRICHTUNG UND SIGNALÜBERTRAGUNGSVERFAHREN DAFÜR
CIRCUIT INTÉGRÉ PILOTE DE SOURCE DE COMMANDE, DISPOSITIF D'AFFICHAGE ET SON PROCÉDÉ DE TRANSMISSION DE SIGNAL

(30) Priority: 24.12.2014 KR 20140188280
(43) Date of publication of application: 29.06.2016
(73) Proprietor: LG Display Co., Ltd., Seoul 07336 (KR)
(72) Inventor: CHOI, HyunIl, Paju-si, Gyeonggi-do 413-718 (KR); YOO, SockJong, Paju-si, Gyeonggi-do 413-774 (KR)
(74) Representative: Ter Meer Steinmeister & Partner

(56) References cited:
- US-A1- 2013 050 302
- US-A1- 2013 093 652
- US-A1- 2013 113 777
- US-A1- 2013 147 693
- HYOUNGSIK NAM ET AL: "A cost-effective 60hz FHD LCD using 800Mbps AiPi technology", JOURNAL OF INFORMATION DISPLAY, vol. 10, no. 1, 1 March 2009 (2009-03-01), pages 37-44, XP055104821, ISSN: 1598-0316, DOI: 10.1080/15980316.2009.9652078

## Description

### CROSS REFERENCE TO RELATED APPLICATION

This application claims priority from and the benefit under 35 U.S.C. §119(a) of Korean Patent Application Number 10-2014-0188280 filed on Dec 24, 2014.

### BACKGROUND OF THE INVENTION

### Field of the Invention

The present invention relates to a controller, a source driver integrated circuit (IC), a display device, and a signal transmission method thereof.

### Description of Related Art

Following the growth of the information society, there is increasing demand for various types of display device able to display images. Recently, various display devices, such as liquid crystal displays (LCDs), plasma display panels (PDPs), and organic light-emitting diode (OLED) displays, are used.

Such a display device is for instance disclosed in US 2013/0050302 A1 and includes: a display panel on which data lines and gate lines are disposed and subpixels are disposed in the shape of a matrix at points where the data lines intersect the gate lines; a data driver supplying data signals to the data lines; a gate driver supplying scanning signals to the gate lines; and a timing controller controlling the data driver and the gate driver. The timing controller outputs a plurality of training packets to the source drivers. When the source drivers lock a clock of the timing controller according to the training packets, the timing controller outputs a plurality of color data packets and a plurality of control packets to the source drivers according to a lock signal. The source drivers respectively output pixel voltages to the display panel and determine output timings of the pixel voltages according to the clock of the timing controller and the control packets. The training packets and the color data packets are serially transmitted to the source drivers.

US 2013/0113777 A1 discloses a method of transferring data between a timing controller and a plurality of source drivers in a display device. The method includes: setting a first source driver of the plurality of source drivers to convert first signals having first voltage levels to second signals having second voltage levels; receiving, by the first source driver, a first test pattern from the timing controller; performing a test by the first source driver, based on the first test pattern, to determine whether an error has occurred in the first test pattern; and when an error has occurred in the first test pattern, adjusting, by the first source driver, an output level of a receiver of the first source driver, so that the first source driver converts the first signals to third signals having third voltage levels different from the second voltage levels.

US 2013/0093652 A1 discloses an organic light-emitting display device that includes an organic light-emitting panel comprising a plurality of pixel regions, each pixel region comprising a scan line and a data line crossing each other, each pixel region further comprising an organic light-emission element and a drive transistor configured to drive the organic light emission element; and a circuit configured to sense a threshold voltage of the drive transistor in a sensing interval and control a light emission of the organic light emission element within the pixel region in a display interval.

Nam et al: "A cost-effective 60hz FHD LCD using 800Mbps AiPi technology", published in Journal of Information Display, Vol.10, No.1, March 2009 proposes AiPi technology that incorporates an embedded clock and control scheme with a point-to-point bus topology, thereby having the smallest possible number of interface lines between a timing controller and column drivers. An embedded clock and control scheme is implemented by means of multi-level signaling, which results in a simple clock/data recovery circuitry.

US 2013/0147693 A1 an organic light emitting display that includes a display panel including pixels, a degradation sensing circuit which senses a threshold voltage of organic light emitting diodes included in the pixels and calculates an average degradation value defined by an average luminance value due to the degradation based on the sensed threshold voltage, a compensation target adjustor which adjusts a compensation target based on the average degradation value, each time the average degradation value is reduced by a previously determined reference value, and a data modulator which adds and subtracts a luminance compensation value determined depending on the adjusted compensation target to and from digital video data and modulates the digital video data.

A timing controller may perform the operation of receiving corresponding data from one or a plurality of source driver ICs of the data driver and recognizing the received data in order to perform a specific process (e.g. a compensation process).

When the timing controller recognizes the data received from the source driver IC(s) using the internal clock thereof, the timing controller may not accurately recognize the data if the data is asynchronous to the internal clock.

When a data recognition error is caused by the asynchronous state, a corresponding process is not accurately performed, which is problematic. When the corresponding process relates to image control, image quality may degrade.

### BRIEF SUMMARY OF THE INVENTION

An object of the present invention is to provide a display device and a method for for signal transmission in a display device, which are able to provide sensing data to the controller in a synchronized manner to allow the controller to recognize the sensing data reliable. It is an further object to provide a controller and a source driver IC which allow the controller to recognize the sensing data reliable and to provide sensing data to the controller in a synchronized manner.

The object is solved by he features of the independent claims. Preferred embodiments are given in the dependent claims.

The main idea of the invention is to provide a synchronization between the controller performing the compensation and the source driver of the data driver receiving the sensing data from the subpixel of the panel and further transmitting the received sensing data to the controller.

Thus, the object is solved by display device comprising: a display panel on which a plurality of subpixels is disposed; at least one source driver integrated circuit for driving data lines of the display panel; a controller adapted to transmit a timing information on a lock signal to the at least one source driver integrated circuit, wherein the at least one source driver integrated circuit is adapted to transmit data synchronized to the timing information to the controller in response to the lock signal carrying the timing information being input.

Preferably, the timing information corresponds to an internal clock signal of the controller.

According to another aspect, a display device is provided comprising a display panel on which a plurality of subpixels is disposed; a controller transmitting an internal clock on a lock signal; and a plurality of source driver integrated circuits transmitting data synchronized to the internal clock to the controller in response to the lock signal carrying the internal clock being input.

According to another aspect there is provided a display device comprising: display panel having data lines and gate lines, wherein subpixels are disposed at intersections of the data lines and gate lines; at least one source driver integrated circuit for supplying data signals to the data lines and receiving sensing data from a subpixel; at least one gate driver integrated circuit for supplying scanning signals to the gate lines; a controller for controlling the source driver IC and the gate driver IC; an analog/digital converter, ADC, for receiving the sensing data of the subpixel and for converting the sensing data to a digital data and outputting the digital data to the controller, wherein the controller is adapted to provide timing information to the source driver IC for adjusting in the source driver IC the timing for outputting of the digital data to the timing of the controller, wherein the controller is adapted to perform a compensation based on the received digital data. Thus, the source driver IC can already perform a synchronization of the sensing data before being transmitted to the controller. So the controller is able to reliable recognize the sensing data.

Preferably, the display device may further comprise at least one of data lines and gate lines, wherein the subpixels are disposed at intersections of the data lines and gate lines; and at least one gate driver integrated circuit for supplying scanning signals to the gate lines.

Preferably, the source driver integrated circuit may include an ADC. So the sensing data being analog voltages are converted into digital data directly in the source driver IC. Alternatively the ADC could be provided separately, outside the source driver IC.

Preferably, each of the plurality of source driver integrated circuits may comprise an analog-to-digital converter sensing a voltage at a specific node in a corresponding subpixel of the plurality of subpixels and outputting sensing data by converting the sensed voltage into a digital value.

Preferably, the specific node may comprise a source node or a drain node of a driving transistor driving an organic light-emitting diode disposed on the corresponding subpixel.

Preferably, the subpixel may include a circuitry for sensing a characteristic of the subpixel and for providing the sensing data in form of an analog voltage to the ADC.

Preferably, the sensing circuitry may include a sensing transistor for connecting a predetermined node inside the circuitry of the subpixel, which is to be measured to a reference voltage line.

Preferably, the reference voltage line being connected to the source driver integrated circuit.

By use of the reference voltage line the sensed data can be transmitted to the ADC. However, instead of using a reference voltage line it is possible to use also the data line during a sensing period. So then no additional line is required. Further preferably, switch may be provided for providing a reference voltage to the reference voltage line or the data line for injecting a predetermined value into the circuitry of the subpixel. After applying a predetermined voltage to the subpixel via the reference voltage line or the data line, the switch can change and use the respective line for providing the sensing data of the subpixel to the ADC.

Preferably, the controller may be connected to the at least one source driver IC via a wiring structure. The wiring structure may include at least one of time setting lines for transmitting a lock signal to the source driver IC and/or from the source driver IC to the controller, sensing lines for transmitting digital data of the source driver IC to the controller, and image data lines for transmitting image data to the source driver IC.

Preferably, the time setting lines may include a first transmission line connecting the controller and the source driver IC for transmitting the timing information on the lock signal to the source driver IC and a second transmission line connecting the source driver IC and the controller for transmitting the lock signal including the time information to controller. Thus, the controller knows, after receiving the timing information from the one or last source driver, that the timing information is received and therefore expects sensing data from the source driver by already synchronized.

Preferably, the controller comprises lock signal lines through which the lock signal carrying the internal clock is transmitted, wherein the lock signal lines include a first transmission line connecting the controller and a first source driver integrated circuit of the plurality of source driver integrated circuits that are arranged in series, cascade lines connecting adjacent source driver integrated circuits of the plurality of source driver integrated circuits, and a second transmission line connecting a last source driver integrated circuit of the plurality of source driver integrated circuits and the controller; and bus-low voltage differential signaling lines connecting the plurality of source driver integrated circuits and the controller in order to transmit the data synchronized to the internal clock.

Preferably, a plurality of source driver ICs is provided, in particular for large panels. The plurality of source driver ICs may grouped into at least two groups, each group of source driver ICs is connected via a group connection medium to the controller. Grouping the source driver ICs enables shorter signal run times and a faster processing of the sensing data for faster compensation of the subpixels.

In a preferred embodiment, when several source driver ICs are grouped, the time setting lines further include cascade lines transmitting the time information in a cascade scheme between the source driver ICs of the group. So the first source driver IC receives the timing information and then provides it in a cascade manner to the next until the last of the group provides the timing information back to the controller.

Preferably, the timing information may correspond to an internal clock of the controller. This internal clock is added to a lock signal which is transmitted via the time setting lines

Preferably, the data synchronized to the internal clock comprises the sensing data.

Preferably, the controller may include a lock signal transceiver for transmitting and/or receiving the lock signal carrying the internal clock, a data receiver receiving data synchronized to the internal clock of the controller and compensator for recognizing the sensing data and for performing a compensation process based on the recognized sensing data.

Preferably, the controller may perform operations of: receiving the sensing data, which is the data synchronized to the internal clock, from each of the plurality of source driver integrated circuits; receiving the lock signal carrying the internal clock from at least one source driver integrated circuit of the plurality of source driver integrated circuits; recognizing the sensing data by synchronizing the sensing data to the internal clock carried on the received lock signal; and compensating for the corresponding subpixel based on the recognized sensing data.

Preferably, the source driver IC may include a lock signal transceiver adapted to receive the lock signal carrying the internal clock from a previous source driver IC of the group or from the controller, and a data transmitter adapted to transmit sensing data synchronized to the internal clock carried on the lock signal to the controller.

Preferably, the source driver IC may include a synchronizer for synchronizing the outputted digital data including the sensing data generated by the ADC to the internal clock carried on the lock signal.

Preferably, the controller is adapted to receive the sensing data in digital form and to determine a specific characteristic of the elements in the subpixel based on the received sensing data, thereby obtaining a difference in the specific characteristic, to store the received sensing data, the determined specific characteristic, or data about the obtained difference in the specific characteristic in a memory.

Preferably, the controller may calculate an amount of data to be compensated for each subpixel, and store the calculated amount of data to be compensated in the memory and change data to be supplied to the subpixels based on the amount of data to be compensated for each subpixel, and supply the changed data to be supplied to the subpixels to the source driver IC.

According to another aspect of the invention a method is provided, for signal transmission in a display device comprising a display panel having data lines, gate lines, subpixels disposed at intersections of the data lines and gate lines, at least one source driver integrated circuit; at least one gate driver integrated circuit and a controller: comprising the steps of: transmitting, at the controller, timing information to the source driver integrated circuit; transmitting, at the source driver IC, data to the controller being synchronized to the timing information received from the controller; and receiving, at the controller, data synchronized to the timing information, recognizing the received data being synchronized to the timing information, compensate images data in the controller based on the received data being synchronized to the timing information of the controller.

According to another aspect a signal transmission method of a display device is provided that includes a display panel on which data lines and gate lines are disposed, a source driver integrated circuit driving the data lines, and a controller controlling the source driver integrated circuits, the method comprising the steps of: transmitting, at the controller, an internal clock on a lock signal; transmitting, at the source driver integrated circuit, data to the controller by synchronizing the data to the internal clock carried on the lock signal; and receiving, at the controller, the lock signal carrying the internal clock, and when the data synchronized to the internal clock carried on the lock signal, recognizing the received data by synchronizing the received data to the internal clock carried on the received lock signal.

Preferably, the timing information corresponds to internal clock of the controller, wherein the internal clock is carried on a lock signal, wherein the transmitting, at the source driver IC, data to the controller is performed by synchronizing the data to the internal clock carried on the lock signal and at the controller, the lock signal is received carrying the internal clock, wherein when the data synchronized to the internal clock carried on the lock signal is received, the received data being synchronized to the internal clock carried on the received lock signal is recognized.

The object is also solved by a controller comprising: a lock signal transceiver transmitting and receiving an internal clock on a lock signal; and a data receiver receiving data synchronized to the internal clock.

Preferably, the controller may further comprise a compensator, wherein, when the lock signal transceiver receives a lock signal carrying the internal clock and the data receiver receives the data synchronized to the internal clock corresponding to sensing data, the compensator recognizes the sensing data by synchronizing the sensing data to the internal clock carried on the received lock signal, and performs a compensation process based on the recognized sensing data.

The object is also solved by a source driver integrated circuit comprising: a lock signal transceiver receiving a lock signal carrying an internal clock, and when specific conditions are satisfied, outputting the lock signal; and a data transceiver transmitting data synchronized to the internal clock carried on the lock signal.

Preferably, the source driver integrated circuit may further comprise an analog-to-digital converter sensing a voltage at a specific node in a corresponding subpixel of the plurality of subpixels on a display panel and outputting sensing data by converting the sensed voltage into a digital value; and a synchronizer synchronizing the sensing data to the internal clock carried on the lock signal.

### BRIEF DESCRIPTION OF THE DRAWINGS

The above and other objects, features and advantages of the present invention will be more clearly understood from the following detailed description when taken in conjunction with the accompanying drawings, in which:
FIG. 1 is a schematic diagram illustrating an exemplary system configuration of a display device according to embodiments of the present invention;
FIG. 2 illustrates an exemplary subpixel structure of the display device according to embodiments of the present invention;
FIG. 3 is a schematic diagram illustrating an exemplary wiring structure between a plurality of source driver ICs and a timing controller in the display device according to embodiments of the present invention;
FIG. 4 and FIG. 5 are diagrams illustrating data recognition timing in a timing controller of the display device according to embodiments of the present invention;
FIG. 6 illustrates the transmission of lock signals and B-LVDS data from the plurality of source driver ICs to the timing controller and vice versa in the display device according to embodiments of the invention;
FIG. 7 illustrates a lock signal transmitted by the timing controller in the display device according to embodiments of the invention;
FIG. 8 illustrates sensing data transmitted by each source driver IC in the display device according to embodiments of the invention;
FIG. 9A is a block diagram illustrating a controller of the display device according to embodiments of the invention;
FIG. 9B illustrates an internal configuration diagram of a lock signal transceiver of the controller;
FIG. 10 is an exemplary block diagram of the source driver IC of the display device according to embodiments of the invention; and
FIG. 11 is a flowchart illustrating a signal transmission method of the display device according to embodiments of the invention.

### DETAILED DESCRIPTION OF THE INVENTION

Reference will now be made in detail to the present invention, embodiments of which are illustrated in the accompanying drawings. Throughout this document, reference should be made to the drawings, in which the same reference numerals and signs may be used throughout the different drawings to designate the same or similar components. In the following description of the present invention, detailed descriptions of known functions and components incorporated herein will be omitted in the case that the subject matter of the present invention may be rendered unclear thereby.

It will also be understood that, although terms such as "first," "second," "A," "B," "(a)" and "(b)" may be used herein to describe various elements, such terms are only used to distinguish one element from another element. The substance, sequence, order or number of these elements is not limited by these terms. It will be understood that when an element is referred to as being "connected to" or "coupled to" another element, not only can it be "directly connected" or "coupled to" the other element, but also can it be "indirectly connected or coupled to" the other element via an "intervening" element. In the same context, it will be understood that when an element is referred to as being formed "on" or "under" another element, not only can it be directly formed on or under another element, but also can it be indirectly formed on or under another element via an intervening element.

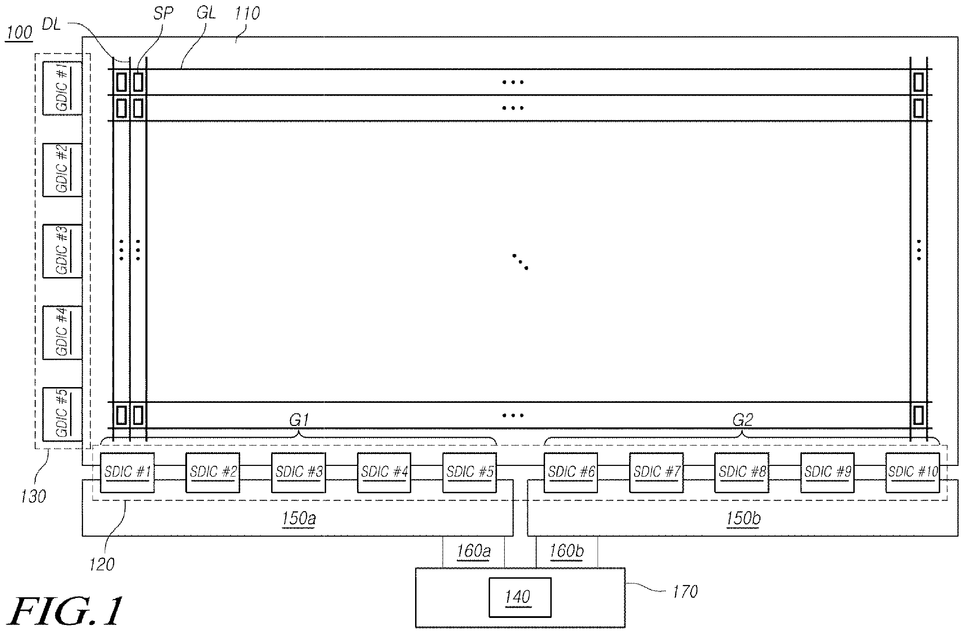

FIG. 1 is a schematic diagram illustrating an exemplary system configuration of a display device 100 according to embodiments of the present invention.

Referring to FIG. 1, the display device 100 according to embodiments of the present invention includes a display panel 110, a data driver 120, a gate driver 130, and a timing controller 140.

On the display panel 110, a plurality of data lines DL is disposed in a first direction, a plurality of gate lines GL is disposed in a second direction crossing the first direction, and a plurality of subpixels SP is disposed in the shape of a matrix. The data driver 120 drives the data lines by supplying data voltages to the data lines. The gate driver 130 sequentially drives the gate lines by sequentially supplying gate voltages to the gate lines. The timing controller 140 controls the data driver 120 and the gate driver 130 by supplying control signals to the data driver 120 and the gate driver 130.

The timing controller 140 starts scanning based on the timing set in each frame, converts image data input from an external source (e.g. a host system (not shown)) according to a data signal format used by the data driver 120, outputs the converted image data, and regulates data driving at an appropriate point of time according to the scanning.

The gate driver 130 sequentially drives the gate lines by sequentially supplying an on-voltage signal or an off-voltage signal to the gate lines under the control of the timing controller 140.

As illustrated in FIG. 1, the gate driver 130 is positioned on one side of the display panel 110. In some cases, the gate driver 130 may be divided into two sections positioned on opposite sides of the display panel 110.

In addition, the gate driver 130 includes a plurality of gate driver integrated circuits (gate driver ICs).

Referring to FIG. 1, the gate driver 130 was illustrated as including five gate driver ICs GDIC #1 to GDIC #5. However, this is only for the sake of explanation, and the gate driver 130 may include one gate driver IC or may include two or more gate driver ICs. In the following description, for the sake of explanation, it will be assumed that the display device 100 includes five gate driver ICs GDIC #1 to GDIC #5.

In addition, the gate driver ICs GDIC #1 to GDIC #5 of the gate driver 130 may be connected to the bonding pads of the display panel 110 by a tape automated bonding (TAB) method or a chip on glass (COG) method, or may be implemented as a gate-in-panel (GIP) type circuit directly disposed on the display panel 110. In some cases, each of the gate driver ICs GDIC #1 to GDIC #5 may be integrated with the display panel 110.

Each of the gate driver ICs GDIC #1 to GDIC #5 includes a shift register, a level shifter, an output buffer, and the like.

When a specific gate line is opened, the data driver 120 drives the data lines by converting image data received from the timing controller 140 to analog data voltages and supplying the analog data voltages to the data lines.

The data driver 120 includes one or more source driver ICs (also referred to as "data driver ICs").

Referring to FIG. 1, the data driver 120 was illustrated as including ten source driver ICs SDIC #1 to SDIC #10. However, this is only for the sake of explanation, and the data driver 120 may include one source driver IC or may include two or more source driver ICs. In the following description, for the sake of explanation, it will be assumed that the display device 100 includes ten source driver ICs SDIC #1 to SDIC #10.

The source driver ICs SDIC #1 to SDIC #10 of the data driver 120 may be connected to the bonding pads of the display panel 110 by a tape automated bonding (TAB) method or a chip on glass (COG) method, or may be implemented as a gate-in-panel (GIP) type circuit directly disposed on the display panel 110. In some cases, each of the source driver ICs SDIC #1 to SDIC #10 may be integrated with the display panel 110.

Each of the source driver ICs SDIC #1 to SDIC #10 includes a shift register, a latch, a digital-to-analog converter (DAC), an output buffer, and the like. In some cases, each source driver IC may further include an analog-to-digital converter (ADC) functioning for subpixel compensation. The ADC senses an analog voltage value, converts the analog voltage value to a digital data or digital voltage value, and outputs the digital data or digital voltage value.

In addition, each of the source driver ICs SDIC #1 to SDIC #10 may be embodied by a chip-on-bonding (COB) method. In each of the source driver ICs SDIC #1 to SDIC #10, one end is bonded to at least a source printed circuit board (PCB) 160, and the other end is bonded to the display panel 110.

The source PCB may be a single source PCB, may be two source PCBs 150a and 150b as in FIG. 1, or may be three or more source PCBs. In the following, for the sake of explanation, it will be assumed that the display device 100 includes two source PCBs 150a and 150b.

The source driver ICs SDIC #1 to SDIC #10 of the data driver 120 may be included in the same group or may be divided into several groups.

In the following, it will be assumed that the first five source driver ICs SDIC #1 to SDIC #5 from the left belong to a first group G1 and the remaining five source driver ICs SDIC #6 to SDIC #10 belong to a second group G2.

The source driver ICs belonging to each group transmit and receive signals and data to and from the timing controller 140 through a single wiring structure.

Accordingly, the display device 100 according to embodiments of the invention includes a first group wiring structure through which the source driver ICs SDIC #1 to SDIC #5 belonging to the first group transmit and receive signals and data to and from the timing controller 140 and a second group wiring structure through which the source driver ICs SDIC #6 to SDIC #10 belonging to the second group transmit and receive signals and data to and from the timing controller 140.

In this regard, the first group wiring structure includes the first group source PCB 150a to which the source driver ICs SDIC #1 to SDIC #5 of the first group G1 are bonded and a first group connection medium 160a through which the first group source PCB 150a is connected to a control PCB 170 on which the timing controller 140 is disposed.

In addition, the second group wiring structure includes the second group source PCB 150b to which the source driver ICs SDIC #6 to SDIC #10 of the second group G2 are bonded and a second group connection medium 160b through which the second group source PCB 150b is connected to a control PCB 170 on which the timing controller 140 is disposed.

The first group connection medium 160a and the second group connection medium 160b stated above may be implemented as, for example, a flexible flat cable (FFC) or a flexible printed circuit (FPC).

The timing controller 140 receives image data of an incoming input image and a variety of timing signals from an external host system (not shown). The variety of timing signals may include a vertical synchronization signal Vsync, a horizontal synchronization signal Hsync, an input data enable signal DE, a clock signal CLK, or the like.

The timing controller 140 receives the timing signals, such as the vertical synchronization signal, the horizontal synchronization signal, the input data enable signal, and the clock signal, generates a variety of control signals, and outputs the control signals to the data driver 120 and the gate driver 130 in order to control the data driver 120 and the gate driver 130, in addition to outputting converted image data produced by converting incoming image data input from the host system into the data signal format used in the data driver 120.

For example, the timing controller 140 outputs a variety of gate control signals (GCSs) including a gate start pulse (GSP), a gate shift clock (GSC), and a gate output enable signal (GOE) in order to control the gate driver 130. The gate start pulse controls the operation start timing of the one or more gate driver ICs GDIC #1 to GDIC #5 of the gate driver 130. The gate shift clock is a clock signal commonly input to the one or more gate driver ICs GDIC #1 to GDIC #5, and controls the shift timing of the scanning signal (gate pulse). The gate output enable signal designates the timing information of the one or more gate driver ICs GDIC #1 to GDIC #5.

The timing controller 140 outputs a variety of data control signals (DCSs) including a source start pulse (SSP), a source sampling clock (SSC) and a source output enable signal (SOE) in order to control the data driver 120. The source start pulse controls the data sampling start timing of the one or more source driver ICs SDIC #1 to SDIC #10 of the data driver 120. The source sampling clock is a clock signal to control the data sampling timing of each of the source driver ICs SDIC #1 to SDIC #10. The source output enable signal controls the output timing of the data driver 120. In some cases, the data control signals may further include a polarity control signal (POL).

Referring to FIG. 1, a power controller (not shown) is further disposed on the control PCB 170. The power controller (not shown) supplies a variety of voltages or currents to the display panel 110, the data driver 120, the gate driver 130, and the like, or controls the variety of voltages or currents to be supplied to the display panel 110, the data driver 120, the gate driver 130, and the like. The power controller is also referred to as the power management IC (PMIC).

The display device 100 schematically illustrated in FIG. 1 may be one selected from among, but is not limited to, a liquid crystal display (LCD), a plasma display device, and an organic light-emitting diode (OLED) display.

Circuit devices, such as a transistor and a capacitor, are formed on each of the subpixels SP disposed on the display panel 110. For example, when the display panel 110 is an OLED panel, a circuit including an OLED, two or more transistors, and one or more capacitors is formed on each of the subpixels.

A description of the structure of a subpixel circuit will be given below assuming the display panel 110 is an OLED panel.

Each of the subpixels SP disposed on the display panel 110 according to embodiments of the invention includes an OLED and a driving circuit.

The driving circuit basically includes a driving transistor (DRT) driving the OLED, a switching transistor (SWT) applying a data voltage to a gate node of the driving transistor when a corresponding row is selected by a scanning signal, and a storage capacitor (Cstg) maintaining the data voltage for a period of a single frame.

That is, each subpixel of the display panel 110 implemented as an OLED panel basically includes two transistors (DRT, SWT) and a single capacitor (Cstg). One or more transistors or one or more capacitors may be added as required.

The driving transistor (DRT) in each subpixel has unique characteristics, such as a threshold voltage (Vth) and mobility.

Since the driving transistor (DRT) degrade along with the lapse of the driving time, the characteristics, such as the threshold voltage and the mobility, change.

This may consequently increase the differences in the unique characteristics between the driving transistors (DRT) of the subpixels, thereby causing the difference in the luminance between the subpixels to be more significant.

Such differences in the luminance between the subpixels may cause the luminance of the display panel 110 to be non-uniform, thereby significantly lowering the image quality of the display panel 110.

Accordingly, the display device 100 according to embodiments of the invention provides a technology for sensing the unique characteristics of the driving transistors (DRT) of the subpixels, determining differences in the unique characteristics, and compensating for the differences in the unique characteristics.

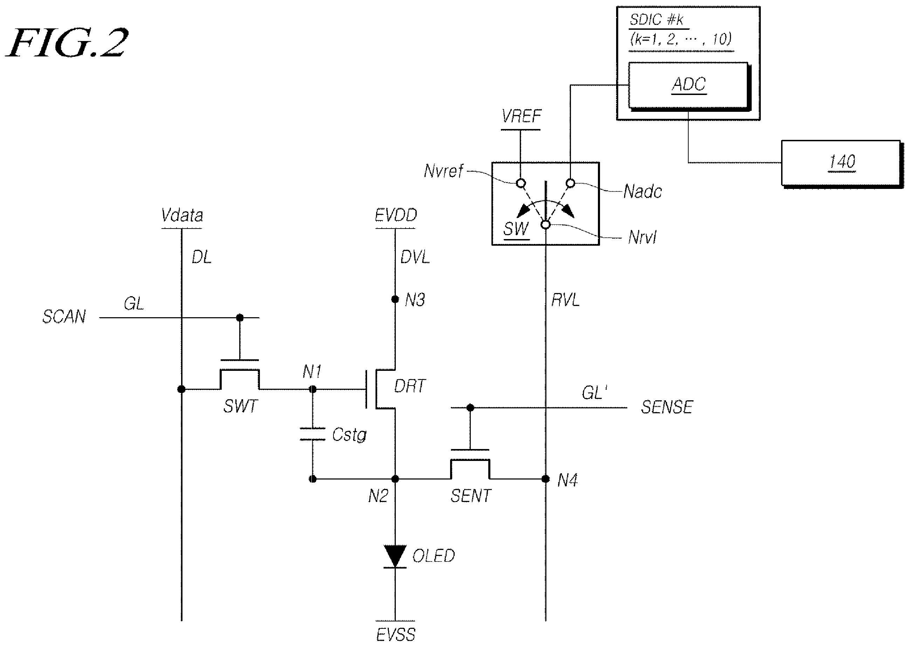

For the compensation for the differences in the unique characteristics, the structure of each subpixel may also be altered. FIG. 2 illustrates an exemplary subpixel structure for compensating for the differences in the unique characteristics.

A description will be given, by way of example, of a three-transistor and one-capacitor (3T1C) structure including one OLED, three transistors, and one capacitor.

FIG. 2 illustrates an exemplary subpixel structure of the display device 100 according to embodiments of the present invention.

Referring to FIG. 2, each subpixel has a 3T1C structure, in which three transistors including a driving transistor DRT, a scanning transistor SWT, and a sensing transistor SENT and a single storage capacitor Cstg are provided in addition to a single OLED.

The subpixel structure illustrated in FIG. 2 is an exemplary subpixel structure to which sensing and compensation functions are applied in order to compensate for the differences in the unique characteristics (e.g. a threshold voltage and mobility) of the driving transistor DRT.

The OLED includes a first electrode (e.g. an anode or a cathode), an organic layer, and a second electrode (e.g. the cathode or the anode). The first electrode is electrically connected to a second node (N2 node) of the driving transistor DRT, and the second electrode is electrically connected to a node to which a base voltage EVSS is supplied.

Compensation for the differences in the unique characteristics of the driving transistor DRT is used as having the same meaning as compensation for the differences in the luminance of the subpixel, and is used as having the same meaning as "data compensation" since data to be supplied to the subpixel must be changed for the luminance compensation. That is, the compensation for the differences in the unique characteristics of the driving transistor, the luminance compensation, the data compensation, and pixel compensation are used as having the same meaning.

The driving transistor DRT, a transistor driving the OLED, has a first node (N1 node) corresponding to the gate node, a second node (N2 node, for example, a source node or a drain node) electrically connected to the first electrode (e.g. the anode or a drain electrode) of the OLED, and a third node (N3 node, for example, the drain node or the source node) electrically connected to a driving voltage line DVL through which a driving voltage EVDD is supplied.

The switching transistor SWT is a transistor applying a data voltage Vdata to the N1 node corresponding to the gate node of the driving transistor DRT. The switching transistor SWT is controlled by a scanning signal SCAN applied to the gate node through a corresponding gate line GL, and is electrically connected between the N1 node corresponding to the gate node of the driving transistor DRT and a data line DL.

The storage capacitor Cstg is electrically connected between the N1 node and the N2 node of the driving transistor DRT, and functions to maintain a predetermined voltage for the period of a single frame.

The sensing transistor SENT is controlled by a sensing signal SENSE, a type of scanning signal, applied to the gate node from a corresponding gate line GL', and is electrically connected between a reference voltage line RVL through which a reference voltage VREF is supplied and the N2 node of the driving transistor DRT. Here, an N4 node corresponding to a drain node or a source node of the sensing transistor SENT is connected to the reference voltage line RVL, and the source node or the drain node of the sensing transistor SENT is connected to the N2 node of the driving transistor DRT.

The subpixel structure of the display device 100 further includes a switch SW connected to one side of the reference voltage line RVL and an analog-to-digital converter ADC able to be electrically connected to the reference voltage line RVL in response to the switching operation of the switch SW.

The ADC senses a voltage at a specific node of a corresponding subpixel(s), generates sensing data by converting the sensed voltage into a digital value, and outputs the sensing data to the timing controller 140.

The use of the ADC allows information (e.g. a threshold voltage or a difference in the threshold voltage) necessary in the digital environment to be sensed and the data compensation to be performed.

The specific node corresponding to a sensing node where the ADC senses a voltage is a node where the threshold voltage of the driving transistor DRT driving the OLED can be sensed. The specific node may be the N2 node corresponding to the source node or the drain node of the driving transistor DRT disposed in the corresponding subpixel.

This feature makes it possible to sense the unique characteristics, such as the threshold voltage or the mobility, of the driving transistor DRT driving the OLED, and a difference in the unique characteristics.

Referring to FIG. 2, the switch SW may connect a reference voltage supply node Vref or a node Nadc connected to the ADC to a node Nrvl connected to the reference voltage line RVL in response to a switching timing control signal.

When the switch SW connects the reference voltage supply node Vref to the node Nrvl connected to the reference voltage line RVL in response to the switching timing control signal, the reference voltage VREF is supplied to the reference voltage line RVL. Consequently, the reference voltage VREF is applied to the N2 node of the driving transistor DRT through the sensing transistor SENT that is turned on.

When the switch SW connects the node Nadc connected to the ADC to the node Nrvl connected to the reference voltage line RVL in response to the switching timing control signal, the ADC corresponding to a sensor can sense the voltage of the reference voltage line RVL through the reference voltage line RVL.

At this time, when the sensing transistor SENT is turned on, the ADC can sense a voltage at the N2 node of the driving transistor DRT by sensing the voltage of the reference voltage line RVL.

As above, the sensing node where the ADC senses a voltage may be the N2 node corresponding to the source node or the drain node of the driving transistor DRT.

The voltage sensed by the ADC may be expressed based on the data voltage Vdata that has been output to the drain node or the source node of the switching transistor SWT through the data line DL and subsequently applied to the N1 node of the driving transistor DRT and the threshold voltage Vth of the driving transistor DRT: the sensed voltage = Vdata-Vth.

Therefore, it is possible to determine the threshold voltage of the driving transistor DRT using the voltage Vdata-Vth sensed by the ADC and the data voltage Vdata that is already known.

The ADC performs a sensing process including sensing a voltage at the sensing node in each of the plurality of subpixels, converting the sensed voltage into a digital value, generating sensing data including the converted digital value, and transmitting the sensing data to the timing controller 140.

The use of the ADC enables the process of sensing a voltage (an analog value) at the sensing node of each subpixel, converting the sensed voltage into a digital value, and providing the converted digital value to the timing controller 140, such that the timing controller 140 can accurately sense the threshold voltage of the driving transistor DRT based on the received digital value.

The timing controller 140 receives the sensing data and determines the threshold voltage Vth of the driving transistor DRT in each subpixel based on the received sensing data, thereby obtaining a difference in the threshold voltage ΔVth.

In this case, the timing controller 140 stores the received sensing data, the determined threshold voltage, or data about the obtained difference in the threshold voltage in memory (not shown).

In order to compensate for the difference in the threshold voltage ΔVth, the timing controller 140 calculates an amount of data to be compensated ΔData for each subpixel, and stores the calculated amount of data to be compensated ΔData in the memory.

After the amount of data to be compensated ΔData for each subpixel is calculated as above, the timing controller 140 changes data to be supplied to the subpixels based on the amount of data to be compensated ΔData for each subpixel, and supplies the changed data to be supplied to the subpixels to the data driver 120. The data driver 120 converts the received data into data voltages and subsequently applies the converted data voltages to the subpixels, whereby compensation is actually carried out.

The above-stated switching timing control signal is a signal controlling the switching operation On/Off in order to set a voltage at the second node N2 of the driving transistor DRT according to the driving operation in display mode or sensing mode. The switching timing control signal can be output from the timing controller 140.

The above-stated ADC may be included in each of a plurality of source driver ICs SDIC #k (k=1, 2, ..., 10) of the data driver 120.

As described above, the ADC corresponding to a sensing part for compensation is included in each source driver IC. Accordingly, there are advantages in that the number of parts can be reduced and the sensing operation can be performed in association with data driving.

Each reference voltage line RVL may be present in one column of subpixels or two or more columns of subpixels.

Referring to FIG. 2, the two gate lines GL and GL' through which the two scanning signals SCAN and SENSE are applied to the gate nodes of the two transistors SWT and SENT may be different gate lines or may be portions of the same gate line.

When the two gate lines GL and GL' through which the two scanning signals SCAN and SENSE are applied to the gate nodes of the two transistors SWT and SENT are different gate lines, it may be regarded that the gate line GL illustrated in FIG. 1 includes the two gate lines.

A description will be given below of a signal wiring structure between the source driver ICs SDIC #1 to SDIC #10 and the timing controller 140 of the display device 100 according to embodiments of the invention.

The signal wiring structure between the source driver ICs SDIC #1 to SDIC #10 and the timing controller 140 of the display device 100 according to embodiments of the invention may be provided for each group.

Considering the group shape as in FIG. 1, the display device 100 according to embodiments of the invention has the first group wiring structure corresponding to the first group G1 and the second group wiring structure corresponding to the second group G2.

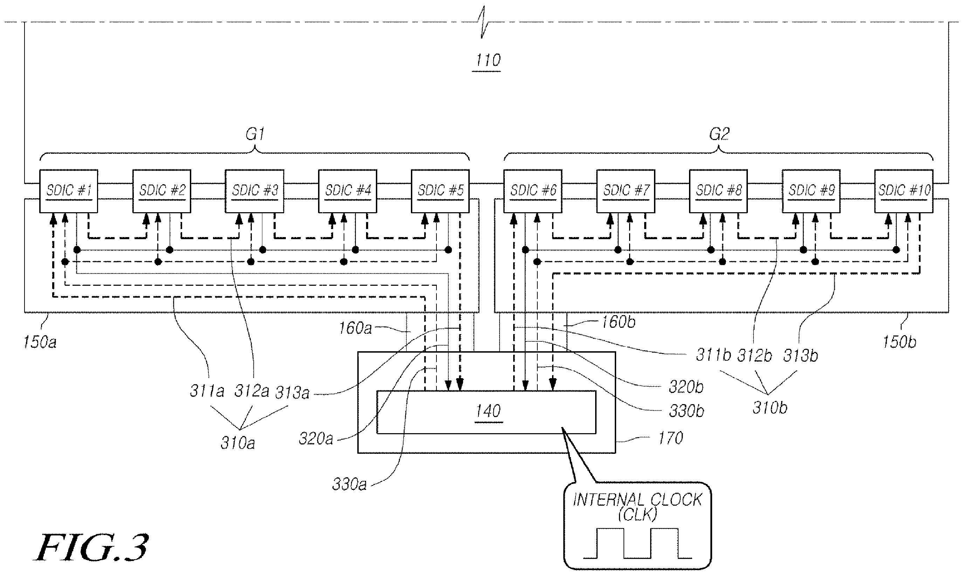

FIG. 3 is a schematic diagram illustrating an exemplary wiring structure between the plurality of source driver ICs SDIC #1 to SDIC #10 and the timing controller 140 in the display device 100 according to embodiments of the present invention.

First, a description of the first wiring structure corresponding to the first group G1 will be given with reference to FIG. 3.

Referring to FIG. 3, the first group wiring structure between the five source driver ICs SDIC #1 to SDIC #5 of the first group G1 that are arranged in series and the timing controller 140 includes lock signal lines 310a through which a lock signal is transmitted, bus-low voltage differential signaling (B-LVDS) lines 320a through which data of the five source driver ICs SDIC #1 to SDIC #5 is transmitted, and image data lines 330a through which image data is transmitted.

In the first group wiring structure, the lock signal lines 310a include a first transmission line 311a, four cascade lines 312a, and a second transmission line 313a in order to transmit a lock signal (LOCK) in a cascade scheme. The first transmission line 311a connects the timing controller 140 and the first source driver IC SDIC #1 of the five source driver ICs SDIC #1 to SDIC #5 of the first group G1 that are arranged in series. The four cascade lines 312a connect the adjacent source driver ICs of the five source driver ICs SDIC #1 to SDIC #5. The second transmission line 313a connects the fifth source driver IC SDIC #5 of the five source driver ICs SDIC #1 to SDIC #5 and the timing controller 140.

The B-LVDS lines 320a of the first group wiring structure connect the five source driver ICs SDIC #1 to SDIC #5 of the first group G1 that are arranged in series and the timing controller 140.

The image data lines 330a of the first group wiring structure connect the timing controller 140 and the five source driver ICs SDIC #1 to SDIC #5 of the first group G1 that are arranged in series.

A description of the second group wiring structure corresponding to the second group will be given with reference to FIG. 3.

Referring to FIG. 3, the second group wiring structure between the five source driver ICs SDIC #6 to SDIC #10 of the second group G2 that are arranged in series and the timing controller 140 include lock signal lines 310b through which lock signals are transmitted, B-LVDS lines 320b through which data of the five source driver ICs SDIC #6 to SDIC #10 is transmitted, and image data lines 330b through which image data is transmitted.

In the second group wiring structure, the lock signal lines 310b include a first transmission line 311b, four cascade lines 312b, and a second transmission line 313b in order to transmit a lock signal (LOCK) in a cascade scheme. The first transmission line 311b connects the timing controller 140 and the first source driver IC SDIC #6 of the five source driver ICs SDIC #6 to SDIC #10 of the second group G1 that are arranged in series. The four cascade lines 312b connect the adjacent source driver ICs of the five source driver ICs SDIC #6 to SDIC #10. The second transmission line 313b connects the fifth source driver IC SDIC #10 of the five source driver ICs SDIC #6 to SDIC #10 and the timing controller 140.

The B-LVDS lines 320b of the second group wiring structure connect the five source driver ICs SDIC #6 to SDIC #10 of the second group G2 that are arranged in series and the timing controller 140.

The image data lines 330b of the second group wiring structure connect the timing controller 140 and the five source driver ICs SDIC #6 to SDIC #10 of the second group G2 that are arranged in series.

Through the above-described wiring structure, signals and/or data can be efficiently transmitted from the plurality of source driver ICs SDIC #1 to SDIC #10 to the timing controller 140 and vice versa.

The timing controller 140 of the display device 100 according to embodiments of the invention receives data from the plurality of source driver ICs SDIC #1 to SDIC #10, recognizes the received data, and performs a predetermined process.

For example, the plurality of source driver ICs SDIC #1 to SDIC #10 transmits sensing data generated by the ADC, a type of data, to the timing controller 140.

The timing controller 140 receives the sensing data from the plurality of source driver ICs SDIC #1 to SDIC #10, recognizes the received sensing data, and performs a compensation process.

The compensation process may include, for example, a process of determining the unique characteristics of the driving transistor DRT, such as the threshold voltage, or the differences in the unique characteristics in each subpixel, a process of calculating the amount of data to be compensated for each pixel based on the unique characteristics or the differences in the unique characteristics, and a process of storing the unique characteristics or the differences in the unique characteristics and the amount of data to be compensated.

The timing controller 140 recognizes data (e.g. sensing data) received from the plurality of source driver ICs SDIC #1 to SDIC #10 using an internal clock (CLK) thereof.

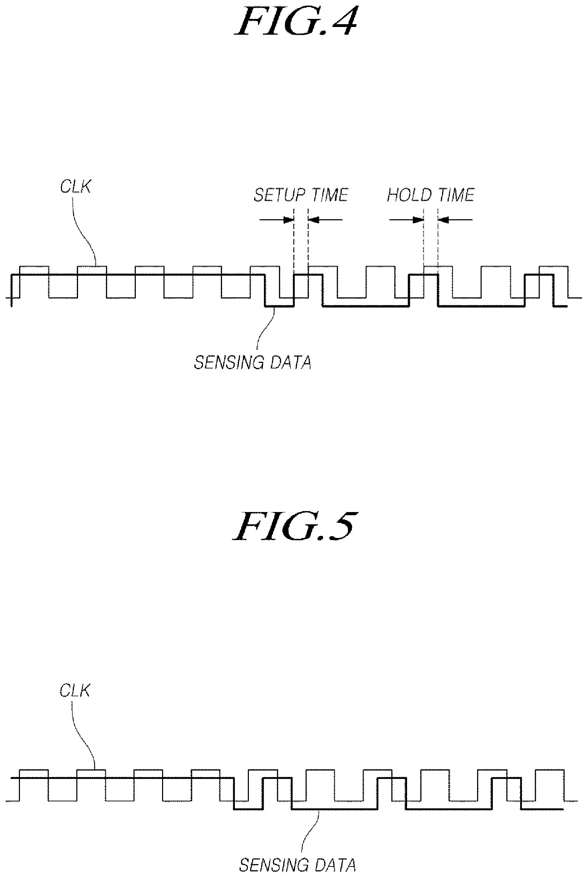

In the recognition of the data, the timing controller 140 can accurately recognize the data (e.g. sensing data) received from the plurality of source driver ICs SDIC #1 to SDIC #10 when the data transmitted from the plurality of source driver ICs SDIC #1 to SDIC #10 is synchronous to the internal clock (CLK), as illustrated in FIG. 4.

The data transmitted from the plurality of source driver ICs SDIC #1 to SDIC #10 being synchronous to the internal clock (CLK) indicates that the sensing data is in a high-level section at a point of time when the internal clock (CLK) is changed to a high level, as illustrated in FIG. 4.

Referring to FIG. 4, in the synchronization state, a setup time corresponding to a time interval from a point when the sensing data is changed to a high level to a point when the internal clock (CLK) is changed to a high level in which the sensing data stays at the high level must be at least a predetermined period of time.

In addition, referring to FIG. 4, in the synchronization state, a hold time corresponding to a time interval from a point when the internal clock (CLK) is changed to the high level to a point when the sensing data is changed to a low level in which the sensing data stays in the high level must be at least a predetermined period of time.

However, in the case of data recognition, data transmitted from the plurality of source driver ICs SDIC #1 to SDIC #10 may not be synchronous to the internal clock (CLK), as illustrated in FIG. 5. In this asynchronous state, the timing controller 140 cannot accurately recognize the data (e.g. the sensing data) received from the plurality of source driver ICs SDIC #1 to SDIC #10.

As illustrated in FIG. 5, in the asynchronous state, the sensing data is not in the high-level section at a point when the internal clock (CLK) is changed to the high level.

This asynchronous state occurs since each of the plurality of source driver ICs SDIC #1 to SDIC #10 transmits data (e.g. the sensing data) without a clock.

In addition, when the timing controller 140 recognizes the data (e.g. the sensing data) transmitted from each of the plurality of source driver ICs SDIC #1 to SDIC #10 using the internal clock (CLK) thereof, the data may become asynchronous to the internal clock according to external environmental factors. The external environmental factors may include, for example, the temperature, the lengths of the connection media 160a and 160b, a pattern of bus-low voltage differential signal data, and the code of the timing controller 140.

The above-described asynchronous state is also referred to as a skew phenomenon.

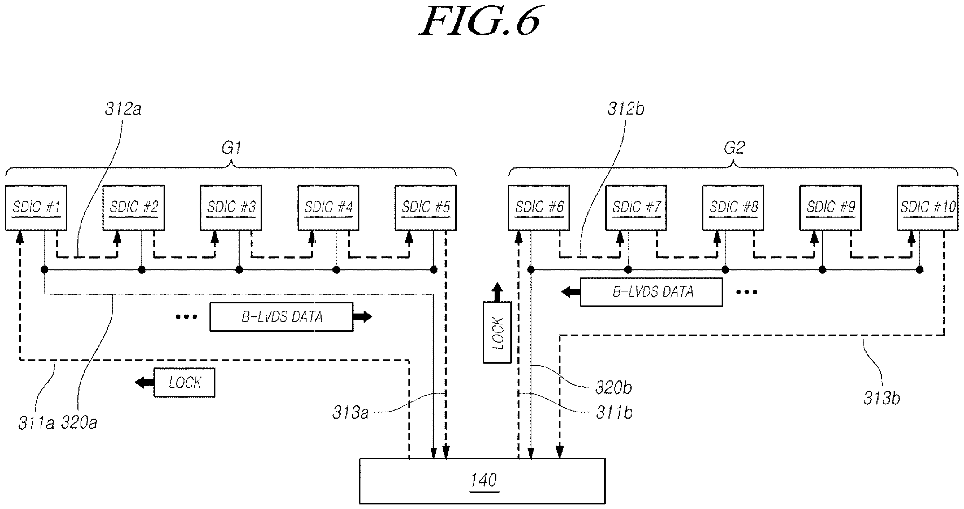

A description of a method of preventing the above-described asynchronous state (skew phenomenon) will be given below with reference to FIG. 6 to FIG. 8.

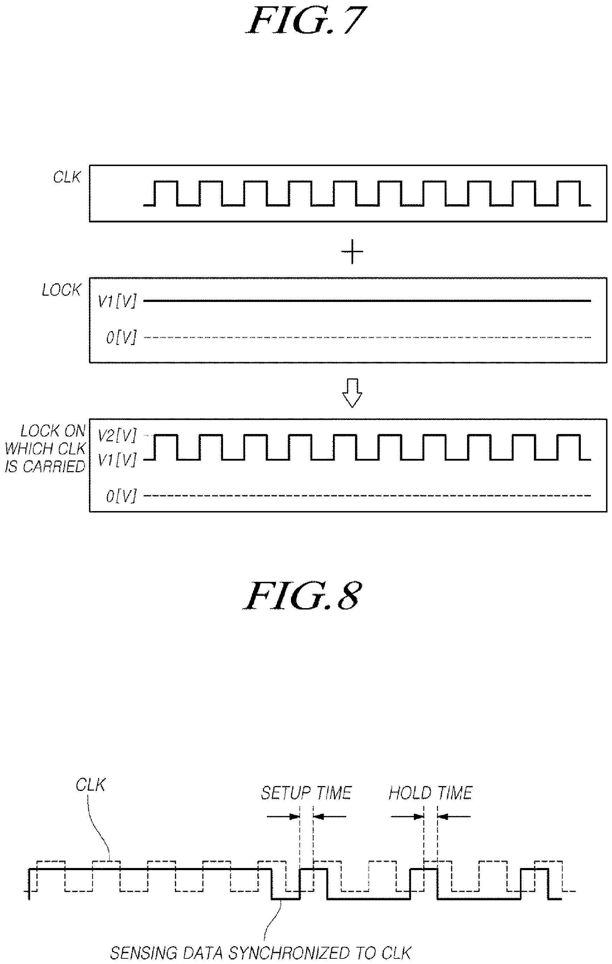

FIG. 6 illustrates the transmission of lock signals LOCK and B-LVDS data (sensing data) from the plurality of source driver ICs SDIC #1 to SDIC #10 to the timing controller 140 and vice versa in the display device 100 according to embodiments of the invention, FIG. 7 illustrates a lock signal transmitted by the timing controller 140 in the display device 100 according to embodiments of the invention, and FIG. 8 illustrates sensing data transmitted by each source driver IC in the display device 100 according to embodiments of the invention.

Referring to FIG. 6, when all the source driver ICs SDIC #1 to SDIC #10 of the display device 100 are divided into the two groups G1 and G2, the display device 100 has the first group wiring structure corresponding to the first group G1 and the second group wiring structure corresponding to the second group G2. If the source driver ICs SDIC #1 to SDIC #10 of the display device 100 are not grouped, i.e. all the source driver ICs SDIC #1 to SDIC #10 belong to a single group, the display device 100 has a single wiring structure (identical to the first wiring structure or the second wiring structure).

Referring to FIG. 6, the first group wiring structure corresponding to the first group G1 including the five source driver ICs SDIC #1 to SDIC #5 from the left includes lock signal lines 310a through which lock signals are transmitted, B-LVDS lines 320a through which the B-LVDS data (e.g. sensing data) of the five source driver ICs SDIC #1 to SDIC #5 is transmitted, and the like.

In the first group wiring structure, the lock signal lines 310a include the first transmission line 311a, the four cascade lines 312a, and the second transmission line 313b in order to transmit a lock signal LOCK on which an internal clock is added in a cascade scheme. The first transmission line 311a connects the timing controller 140 and the first source driver IC SDIC #1 of the five source driver ICs SDIC #1 to SDIC #5 of the first group G1 that are arranged in series. The four cascade lines 312a connect the adjacent source driver ICs of the five source driver ICs SDIC #1 to SDIC #5. The second transmission line 313b connects the fifth source driver IC SDIC #5 of the five source driver ICs SDIC #1 to SDIC #5 and the timing controller 140.

The B-LVDS lines 320a of the first group wiring structure connect the five source driver ICs SDIC #1 to SDIC #5 of the first group G1 that are arranged in series and the timing controller 140 in order to transmit the data (B-LVDS data) synchronized to the internal clock CLK.

Although not shown in FIG. 6, in order to transmit image data, the image data lines 330a of the first group wiring structure connect the adjacent source driver ICs of the five source driver ICs SDIC #1 to SDIC #5 of the first group G1 that are arranged in series in the same manner as in FIG. 3.

Referring to FIG. 6, the second group wiring structure corresponding to the second group G2 including the five source driver ICs SDIC #6 to SDIC #10 except for the five source driver ICs SDIC #1 to SDIC #5 of the first group G1 includes the lock signal lines 310b through which lock signals are transmitted, the B-LVDS lines 320b through which the B-LVDS data (e.g. sensing data) of the five source driver ICs SDIC #6 to SDIC #10 is transmitted, and the like.

In the second group wiring structure, the lock signal lines 310b include the first transmission line 311b, the four cascade lines 312b, and the second transmission line 313b in order to transmit a lock signal (LOCK) in a cascade scheme. The first transmission line 311b connects the timing controller 140 and the first source driver IC SDIC #6 of the five source driver ICs SDIC #6 to SDIC #10 of the second group G1 that are arranged in series. The four cascade lines 312b connect the adjacent source driver ICs of the five source driver ICs SDIC #6 to SDIC #10. The second transmission line 313b connects the fifth source driver IC SDIC #10 of the five source driver ICs SDIC #6 to SDIC #10 and the timing controller 140.

The B-LVDS lines 320b of the second group wiring structure connect the five source driver ICs SDIC #6 to SDIC #10 of the second group G2 that are arranged in series and the timing controller 140.

Although not shown in FIG. 6, in order to transmit image data, the image data lines 330b of the second group wiring structure connect the adjacent source driver ICs of the five source driver ICs SDIC #6 to SDIC #10 of the second group G2 that are arranged in series in the same manner as in FIG. 3.

Referring to FIG. 6 and FIG. 7, the timing controller 140 transmits the internal clock CLK in the shape of a square wave having a predetermined frequency by carrying the internal clock CLK on the lock signal LOCK through the first transmission line 311a of the lock signal lines 310a corresponding to the first group G1 and the first transmission line 311b of the lock signal lines 310b corresponding to the second group G2.

Referring to FIG. 6 and FIG. 7, the first source driver IC SDIC #1 in the first group G1 receives the lock signal LOCK carrying the internal clock CLK from the timing controller 140, and in the case of a normal state (e.g. a state in which a data voltage can be normally output), outputs the lock signal LOCK carrying the internal clock CLK in a high level to the next source driver IC SDIC #2 through the first cascade line of the cascade lines 312a. When all the next source driver IC SDIC #2 and the remaining source driver ICs SDIC #3, SDIC #4, and SDIC #5 are normal, the lock signal LOCK carrying the internal clock CLK is transmitted in the high level through the second to fourth cascade lines of the cascade lines 312a and the second transmission line 313b.

Referring to FIG. 6 and FIG. 7, the first source driver IC SDIC #1 of the first group G1 receives the lock signal LOCK carrying the internal clock CLK from the timing controller 140, and in the case of an abnormal state (e.g. a state in which a data voltage cannot be normally output), outputs the lock signal LOCK carrying the internal clock CLK in a low level to the next source driver IC SDIC #2 through the first cascade line of the cascade lines 312a. The signal LOCK carrying the internal clock CLK is transmitted in the low level to the timing controller 140 through the next source driver IC SDIC #2 and the remaining source driver ICs SDIC #3, SDIC #4, and SDIC #5.

Referring to FIG. 6 and FIG. 7, in response to the lock signal LOCK carrying the internal clock CLK being input, each of the five source driver ICs SDIC #1 to SDIC #5 synchronizes the data (B-LVDS data) to the internal clock CLK carried on the lock signal LOCK and transmits the data (B-LVDS data) synchronized to the internal clock CLK to the timing controller 140 through the B-LVDS lines 320a.

In the second group G2, the timing controller 140 transmits a lock signal LOCK carrying an internal clock CLK, which can be in turn transmitted through the five source driver ICs SDIC #6 to SDIC #10 to the timing controller 140 in the same cascade scheme as in the first group.

In the same manner as in the first group G1, B-LVDS data (sensing data) synchronized to the internal clock CLK carried on the lock signal LOCK can be transmitted from each of the five source driver ICs SDIC #6 to SDIC #10 of the second group G2 to the timing controller 140.

Since the timing controller 140 transmits the internal clock CLK on the lock signal LOCK as described above, each of the plurality of source driver ICs SDIC #1 to SDIC #10 can transmit the B-LVDS data by synchronizing the B-LVDS data to the internal clock CLK known to the timing controller 140. This can consequently prevent data recognition errors from being caused by the asynchronous state (skew phenomenon) in the timing controller 140. It is therefore possible to prevent the following process from being erroneously performed due to a data recognition error caused by the asynchronous state (skew phenomenon).

The data synchronized to the internal clock CLK carried on the lock signal LOCK from each of the plurality of source driver ICs SDIC #1 to SDIC #10 may be data sensed from the corresponding subpixel by the ADC included inside the subpixel.

It is therefore possible to prevent the sensing data from being erroneously recognized due to the asynchronous state (skew phenomenon). This can consequently prevent the unique characteristics of the driving transistor DRT within the corresponding subpixel or the differences in the unique characteristics from being erroneously determined or an amount of data to be compensated from being erroneously calculated due to a sensing data recognition error, thereby improving image quality.

Referring to FIG. 6 and FIG. 8, the timing controller 140 receives the sensing data, i.e. data synchronized to the internal clock CLK, from each of the plurality of source driver ICs SDIC #1 to SDIC #10, and receives the lock signal LOCK carrying the internal clock CLK from at least one of the plurality of source driver ICs SDIC #1 to SDIC #10 (e.g. the last source driver IC when the plurality of source driver ICs is not grouped, or the source driver ICs SDIC #5 and SDIC #10 when the plurality of source driver ICs is divided into the two groups). Afterwards, the timing controller 140 recognizes the received sensing data by synchronizing received sensing data to the internal clock CLK carried on the received lock signal LOCK, and performs a compensation process to compensate for the luminance of the corresponding subpixel based on the recognized sensing data.

The compensation process may include, for example, the process of determining the unique characteristics of the driving transistor DRT, such as the threshold voltage, or the differences in the unique characteristics in each subpixel, the process of calculating the amount of data to be compensated for each pixel based on the determined unique characteristics or the determined differences in the unique characteristics, and the process of storing the unique characteristics or the differences in the unique characteristics and the amount of data to be compensated.

As described above, the timing controller 140 receives the sensing data synchronized to the internal clock CLK from each of the plurality of source driver ICs SDIC #1 to SDIC #10, and recognizes the sensing data using the internal clock CLK (the clock to which the received sensing data is synchronized) carried on the lock signal LOCK. Consequently, the timing controller 140 can prevent the asynchronous state (the skew phenomenon) between the clock and the sensing data, thereby preventing the sensing data from being erroneously recognized. Accordingly, the timing controller 140 can accurately recognize the unique characteristics of the driving transistor DRT in each subpixel and the differences in the unique characteristics and accurately calculate the amount of data to be compensated, thereby improving image quality.

As described above, the timing controller 140 and the source driver ICs SDIC #k (k=1, 2, ..., 10) provide a signal transmission method for preventing a asynchronous state between data and a clock. The timing controller and the source driver ICs will be described again below.

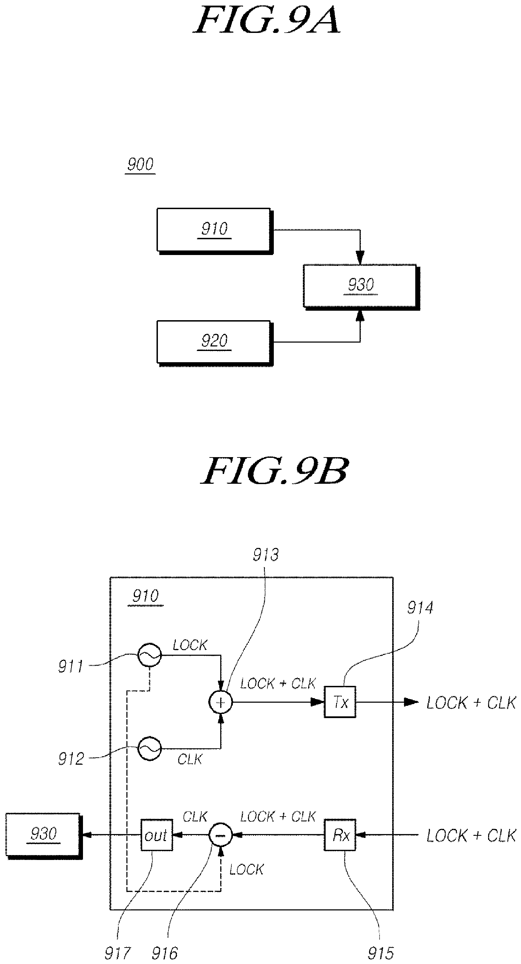

FIG. 9A is a block diagram illustrating a controller 900 of the display device 100 according to embodiments of the invention, and FIG. 9B illustrates an internal configuration diagram of a lock signal transceiver 910 of the controller 900.

Referring to FIG. 9A, the controller 900 of the display device 100 according to embodiments of the invention includes the lock signal transceiver 910 transmitting and receiving a lock signal LOCK carrying an internal clock CLK and a data receiver 920 receiving data synchronized to the internal clock CLK.

As described above, the controller 900 transmits the lock signal LOCK by carrying the internal clock CLK on the lock signal LOCK. Thus, the source driver ICs SDIC #k can transmit B-LVDS data synchronous to the internal clock CLK that is used for the recognition of the B-LVDS data. Accordingly, the timing controller 140 can accurately recognize the B-LVDS data since no asynchronous state (no skew phenomenon) occurs between the internal clock CLK and the B-LVDS data.

Referring to FIG. 9A, the controller 900 of the display device 100 according to embodiments of the invention further includes a compensator 930. When the lock signal transceiver 910 receives the lock signal LOCK carrying the internal clock CLK and the data receiver 920 receives the data corresponding to the sensing data synchronous to the internal clock CLK, the compensator 930 recognizes the sensing data by synchronizing the sensing data to the internal clock CLK carried on the received lock signal LOCK, and performs a compensation process based on the recognized sensing data.

Since the sensing data corresponding to the B-LVDS is received in the state synchronized to the internal clock CLK as described above, the controller 900 can accurately recognize the sensing data. It is therefore possible to accurately perform the compensation process using the sensing data recognition result, thereby improving image quality.

Referring to FIG. 9B, the lock signal transceiver 910 includes a lock signal generator 911 generating a lock signal LOCK, a clock generator 912 generating an internal clock CLK based on stored internal clock information, a signal processor 913 generating the lock signal LOCK carrying the internal clock CLK by coupling the lock signal LOCK generated by the lock signal generator 911 and the internal clock CLK generated by the clock generator 912, and a lock signal transmitter 914 transmitting the lock signal generated by the signal processor 913.

In addition, referring to FIG. 9B, the lock signal transceiver 910 further includes a lock signal receiver 915 receiving a lock signal LOCK carrying an internal clock CLK, a clock extractor 916 extracting the internal clock CLK from the lock signal LOCK received by the lock signal receiver 915, and a lock signal output section 917 outputting the internal clock CLK extracted by the clock extractor 916 to the compensator 930.

In addition, the controller 900 schematically illustrated in FIG. 9A may be the timing controller 140 described herein. Alternatively, one or two components of the lock signal transceiver 910, the data receiver 920, and the compensator 930 of the controller 900 may be embodied in the timing controller 140, and the remaining two or one component may be embodied in a separate controller.

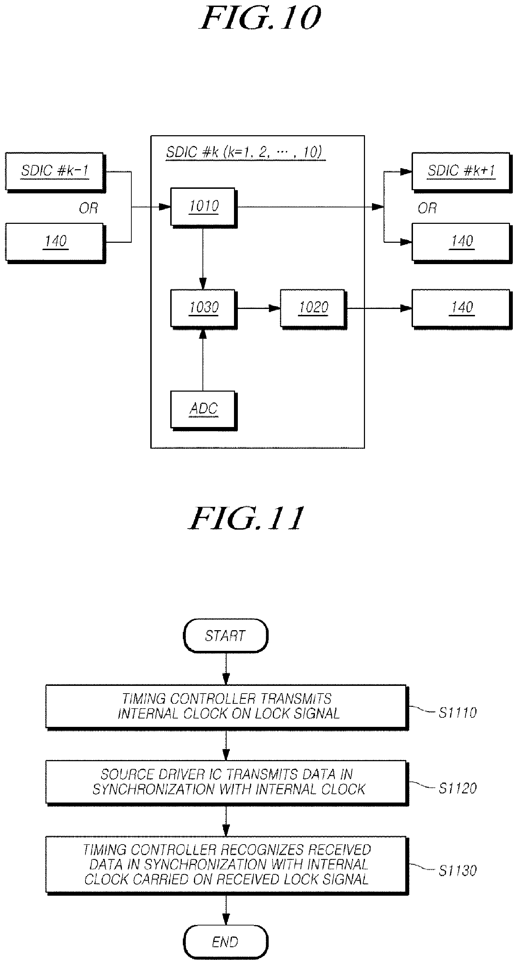

FIG. 10 is an exemplary block diagram of the source driver IC SDIC #k (k=1, 2, ... , 10) of the display device 100 according to embodiments of the invention.

Referring to FIG. 10, the source driver IC SDIC #k (k is one of 1, 2, ... , and 10) of the display device 100 according to embodiments of the invention includes a lock signal transceiver 1010 and a data transmitter 1020. The lock signal transceiver 1010 receives a lock signal LOCK carrying an internal clock CLK from the previous source driver IC SDIC #k-1 or the timing controller 140, and when specific conditions (e.g. a normal state) are satisfied, outputs the lock signal LOCK to the next source driver IC SDIC #k+1 or the timing controller 140. The data transmitter 1020 transmits data (e.g. sensing data) synchronized to the internal clock CLK carried on the lock signal LOCK to the timing controller 140 through the B-LVDS lines 320a and 320b.

As described above, the source driver IC SDIC #k receives the lock signal LOCK carrying the internal clock CLK, and transmits the B-LVDS data synchronized to the internal clock CLK carried on the received lock signal LOCK. Accordingly, when the timing controller 140 recognizes the B-LVDS data, no asynchronous state (no skew phenomenon) occurs, whereby the data can be accurately recognized.

Referring to FIG. 10, the source driver IC SDIC #k (k is one of 1, 2, ... , and 10) of the display device 100 according to embodiments of the invention further includes an ADC and a synchronizer 1030. The ADC senses a voltage at a specific node in a corresponding subpixel on the display panel 110 and outputs sensing data by converting the sensed voltage into a digital value. The synchronizer 1030 synchronizes the sensing data generated by the ADC to the internal clock CLK carried on the lock signal LOCK received by the lock signal transceiver 1010.

Referring to FIG. 10, the data transceiver 1020 transmits the sensing data to the timing controller 140, the sensing data being synchronized to the internal clock CLK carried on the lock signal LOCK by the synchronizer 1030.

Since the source driver IC SDIC #k transmits the sensing data corresponding to the B-LVDS data by synchronizing the sensing data to the internal clock CLK carried on the received lock signal LOCK as described above, when the timing controller 140 recognizes the sensing data corresponding to the B-LVDS data, no asynchronous state (no skew phenomenon) occurs, whereby the sensing data can be accurately recognized. Accordingly, the compensation process using the result of the recognition of the sensing data can be accurately performed, thereby improving image quality.

FIG. 11 is a flowchart illustrating a signal transmission method of the display device 100 according to embodiments of the invention.

Referring to FIG. 11, in the display device 100 including the display panel 110 on which the data lines and the gate lines are disposed, the source driver IC SDIC #k (k is one of 1, 2, ... , and 10) driving the data lines, and the timing controller 140 controlling the source driver IC SDIC #k, the signal transmission method of the display device 100 includes: step S1110 of transmitting, at the timing controller 140, an internal clock CLK by carrying the internal clock CLK on a lock signal LOCK; step S1120 of transmitting, at the source driver IC SDIC #k, data to the timing controller 140 by synchronizing the data to the internal clock CLK carried on the lock signal LOCK; and step S1130 of receiving, at the timing controller 140, the lock signal LOCK carrying the internal clock CLK, and when the data synchronized to the internal clock CLK carried on the lock signal LOCK is received, recognizing the received data by synchronizing the received data to the internal clock CLK carried on the received lock signal LOCK.

According to the above-described signal transmission method, since the timing controller 140 transmits the internal clock CLK by carrying the internal clock CLK on the lock signal LOCK, each of the plurality of source driver ICs SDIC #1 to SDIC #10 can transmit the B-LVDS data synchronized to the internal clock CLK. When the timing controller 140 recognizes the B-LVDS data, no asynchronous state (no skew phenomenon) occurs between the internal clock CLK and the B-LVDS data, whereby the data can be accurately recognized.

According to the embodiments of the invention as set forth above, it is possible to provide the timing controller 140, the source driver IC SDIC #k, the display device 100, and the signal transmission method thereof able to prevent data recognition errors that would otherwise be caused by the asynchronous state between the internal clock CLK and the B-LVDS data.

The foregoing descriptions and the accompanying drawings have been presented in order to explain the certain principles of the present invention. A person skilled in the art to which the invention relates can make many modifications and variations by combining, dividing, substituting for, or changing the elements without departing from the principle of the invention. The foregoing embodiments disclosed herein shall be interpreted as illustrative only but not as limitative of the principle and scope of the invention. It should be understood that the scope of the invention shall be defined by the appended Claims and all of their equivalents fall within the scope of the invention.

## Claims

1. A display device comprising:
bus-low voltage differential signaling lines (320a),
image data lines (330a),
a display panel (110) comprising a plurality of subpixels and a plurality of data lines (DL) connected to the plurality of subpixels;
at least one source driver integrated circuit (SDIC) configured to drive the subpixels via the data lines (DL) of the display panel (110) based on image data received via the image data lines (330a);
a controller (140, 900) configured to transmit the image data to the at least one source driver integrated circuit (SDIC) via the image data lines (330a);
a wiring structure comprising time setting lines (310a), the time setting lines (310a) include a first transmission line (311a) connecting the controller (140, 900) to the at least one source driver IC (SDIC) and a second transmission line (313a) connecting the at least one source driver IC (SDIC) to the controller (140, 900) ;
wherein the controller (140, 900) includes:
a lock signal transceiver (910) configured to transmit a lock signal (LOCK) carrying an internal clock (CLK) via the first transmission line (311a) to the at least one source driver integrated circuit (SDIC) and to receive the lock signal (LOCK) carrying the internal clock (CLK) via the second transmission line (313a) from the at least one source driver integrated circuit (SDIC),
a data receiver (920) configured to receive sensing data transmitted by the at least one source driver integrated circuit (SDIC) synchronized to the internal clock (CLK) of the controller (140, 900); and
a compensator (930) configured to recognize the sensing data received from the data receiver (920) and configured to perform a compensation process on the image data to be transmitted to the at least one source driver integrated circuit (SDIC) based on the recognized sensing data,
wherein the at least one source driver integrated circuit (SDIC) is configured to transmit to the controller (140, 900), via the bus-low voltage differential signaling lines (320a), the sensing data synchronized to the internal clock (CLK) received via the first transmission line (311a), wherein the sensing data corresponds to a characteristic of the subpixels.

2. The display device as claimed in claim 1, further comprising: an analog/digital converter, ADC, for receiving the sensing data of the subpixel and for converting the sensing data to a digital data and outputting the digital data to the controller (140, 900).

3. The display device as claimed in claim 2, wherein the subpixel includes a sensing circuitry for sensing the characteristic of the subpixel and for providing the sensing data in form of an analog voltage to the ADC.

4. The display device as claimed in claim 1, wherein the time setting lines (310a) further include cascade lines (312a) transmitting the lock signal (LOCK) carrying the internal clock (CLK) in a cascade scheme between the source driver ICs (SDIC).

5. The display device as claimed in any one of the preceding claims, wherein a source driver IC (SDIC) includes:
a lock signal transceiver (1010) adapted to receive the lock signal (LOCK) carrying the internal clock (CLK) from a previous source driver IC (SDIC#k-1) of the group (G1, G2) or from the controller (140, 900),
a data transmitter (1020) adapted to transmit sensing data synchronized to the internal clock (CLK) carried on the lock signal (LOCK) to the controller (140, 900).

6. The display device as claimed in any one of the preceding claims, wherein the source driver IC (SDIC) includes a synchronizer (1030) configured to synchrone the outputted digital data including the sensing data generated by the ADC to the internal clock (CLK) carried on the lock signal (LOCK).

7. The display device as claimed in any one of the preceding claims, wherein the controller (140, 900) is adapted to receive the sensing data in digital form and to determine the specific characteristic of the elements in the subpixel based on the received sensing data, thereby obtaining a difference in the specific characteristic, to store the received sensing data, the determined specific characteristic, or data about the obtained difference in the specific characteristic in a memory, wherein the controller (140, 900) is adapted to calculate an amount of data to be compensated (ΔData) for each subpixel, and to store the calculated amount of data to be compensated (ΔData) in the memory and to change data to be supplied to the subpixels based on the amount of data to be compensated (ΔData) for each subpixel, and to supply the changed data to be supplied to the subpixels to the source driver IC.

8. A method for signal transmission of a display device according to one of the device claims 1-7 comprising bus-low voltage differential signaling lines (320a), image data lines (330a), a display panel (110) having data lines (DL), gate lines (GL), subpixels disposed at intersections of the data lines (DL) and gate lines (GL), at least one source driver integrated circuit (SDIC) for driving the subpixels via the data lines (DL) based on image data received via the image data lines (330a), a controller (140, 900) and a wiring structure comprising time setting lines (310a), the time setting lines (310a) include a first transmission line (311a) connecting to the controller (140, 900) and a second transmission line (313a) connecting the at least one source driver IC (SDIC) to the controller (140, 900);
the method includes the steps of:
transmitting (S1110) a lock signal (LOCK) carrying the internal clock (CLK), by the controller (140, 900) to the at least one source driver IC (SDIC) via the first transmission line (311a);
transmitting (S1120), by the source driver IC (SDIC), sensing data synchronized to the internal clock (CLK) received via the first transmission line (311a) to the controller (140, 900) via bus-low voltage differential signaling lines (320a), wherein the sensing data corresponds to a characteristic of the subpixels;
receiving the lock signal (LOCK) carrying the internal clock (CLK) by the controller (140, 900) via the second transmission line (313a);
receiving (S1130), by a data receiver (920) of the controller (140, 900), the sensing data transmitted by the at least one source driver integrated circuit (SDIC);
recognizing the sensing data received from the data receiver (920); and
compensating image data to be transmitted to the at least one source driver integrated circuit (SDIC) by the controller (140, 900) based on the received sensing data.

## Patentansprüche

1. Anzeigevorrichtung, die Folgendes umfasst:
Bus-Niederspannungspegel-Differenzsignalleitungen (320a),
Bilddaten-Leitungen (330a),
ein Anzeigefeld (110), das mehrere Subpixel und mehrere Datenleitungen (DL), die mit den mehreren Subpixeln verbunden sind, umfasst;
mindestens eine integrierte Source-Treiberschaltung (SDIC), die konfiguriert ist, die Subpixel über die Datenleitungen (DL) des Anzeigefelds (110) zu steuern, basierend auf Bilddaten, die über die Bilddaten-Leitungen (330a) empfangen worden sind;
eine Steuereinrichtung (140, 900), die konfiguriert ist, die Bilddaten über die Bilddaten-Leitungen (330a) auf die mindestens eine integrierte Source-Treiberschaltung (SDIC) zu senden;
eine Verdrahtungsstruktur, die Zeiteinstellleitungen (310a) umfasst, wobei die Zeiteinstellleitungen (310a) eine erste Übertragungsleitung (311a), die die Steuereinrichtung (140, 900) mit der mindestens einen integrierten Source-Treiberschaltung (SDIC) verbindet, und eine zweite Übertragungsleitung (313a), die die mindestens eine integrierte Source-Treiberschaltung (SDIC) mit der Steuereinrichtung (140, 900) verbindet, enthält;
wobei die Steuereinrichtung (140, 900) Folgendes enthält:
einen Synchronisierungssignal-Sendeempfänger (910), der konfiguriert ist, ein Synchronisierungssignal (LOCK), das ein internes Taktsignal (CLK) trägt, über die erste Übertragungsleitung (311a) zu der mindestens einen integrierten Source-Treiberschaltung (SDIC) zu senden, und das Synchronisierungssignal (LOCK), das das interne Taktsignal (CLK) trägt, über die zweite Übertragungsleitung (313a) von der mindestens einen integrierten Source-Treiberschaltung (SDIC) zu empfangen,
einen Datenempfänger (920), der konfiguriert ist, Messdaten zu empfangen, die von der mindestens einen integrierten Source-Treiberschaltung (SDIC) gesendet werden, die auf das interne Taktsignal (CLK) der Steuereinrichtung (140, 900) synchronisiert sind; und
einen Kompensator (930), der konfiguriert ist, die Messdaten, die von dem Datenempfänger (920) empfangen worden sind, zu erkennen, und konfiguriert ist, basierend auf den erkannten Messdaten einen Kompensationsprozess an den Bilddaten, die zu der mindestens einen integrierten Source-Treiberschaltung (SDIC) gesendet werden sollen, durchzuführen,
wobei die mindestens eine integrierte Source-Treiberschaltung (SDIC) konfiguriert ist, die Messdaten, die mit dem internen Taktsignal (CLK) synchronisiert sind, die über die erste Übertragungsleitung (311a) empfangen worden sind, über die Bus-Niederspannungspegel-Differenzsignalleitungen (320a) zu der Steuereinrichtung (140, 900) zu senden, wobei die Messdaten Eigenschaften der Subpixel entsprechen.

2. Anzeigevorrichtung nach Anspruch 1, die ferner Folgendes umfasst: einen Analog/Digital-Umsetzer (ADC) zum Empfangen der Messdaten des Subpixels und zum Umsetzen der Messdaten in digitale Daten und Ausgeben der digitalen Daten zu der Steuereinrichtung (140, 900).

3. Anzeigevorrichtung nach Anspruch 2, wobei das Subpixel eine Mess-Schaltungsanordnung zum Messen der Eigenschaften des Subpixels und zum Bereitstellen der Messdaten in Form einer analogen Spannung für den ADC enthält.

4. Anzeigevorrichtung nach Anspruch 1, wobei die Zeiteinstellleitungen (310a) ferner Kaskadenleitungen (312a) enthalten, die das Synchronisierungssignal (LOCK), das das interne Taktsignal (CLK) trägt, in einem Kaskadenschema zwischen den integrierten Source-Treiberschaltungen (SDIC) senden.

5. Anzeigevorrichtung nach einem der vorhergehenden Ansprüche, wobei eine integrierte Source-Treiberschaltung (SDIC) Folgendes enthält:
einen Synchronisierungssignal-Sendeempfänger (1010), der dafür ausgelegt ist, das Synchronisierungssignal (LOCK), das das interne Taktsignal (CLK) trägt, von einer vorhergehenden integrierten Source-Treiberschaltung (SDIC#k-1) der Gruppe (G1, G2) oder von der Steuereinrichtung (140, 900) zu empfangen,
einen Datensender (1020), der dafür ausgelegt ist, Messdaten, die mit dem internen Taktsignal (CLK) synchronisiert sind, das auf dem Synchronisierungssignal (LOCK) geführt wird, zu der Steuereinrichtung (140, 900) zu senden.

6. Anzeigevorrichtung nach einem der vorhergehenden Ansprüche, wobei die integrierte Source-Treiberschaltung (SDIC) einen Synchronisierer (1030) enthält, der konfiguriert ist, die ausgegebenen digitalen Daten, die die Messdaten, die von dem ADC erzeugt worden sind, enthalten, mit dem internen Taktsignal (CLK), das auf dem Synchronisierungssignal (LOCK) getragen wird, zu synchronisieren.

7. Anzeigevorrichtung nach einem der vorhergehenden Ansprüche, wobei die Steuereinrichtung (140, 900) dafür ausgelegt ist, die Messdaten in digitaler Form zu empfangen und die spezifischen Eigenschaften der Elemente in dem Subpixel basierend auf den empfangenen Messdaten zu bestimmen, wodurch eine Differenz in der spezifischen Eigenschaft erhalten wird, um die empfangenen Messdaten, die bestimmte spezifische Eigenschaft oder Daten über die erhaltene Differenz in der spezifischen Eigenschaft in einem Speicher zu speichern, wobei die Steuereinrichtung (140, 900) dafür ausgelegt ist, eine zu kompensierende Datenmenge (ΔData) für jedes Subpixel zu berechnen, und die berechnete zu kompensierende Datenmenge (ΔData) in dem Speicher zu speichern und die Daten, die den Subpixeln zugeführt werden sollen, basierend auf der zu kompensierenden Datenmenge (ΔData) für jedes Subpixel zu verändern, und die veränderten Daten, die den Subpixeln zugeführt werden sollen, der integrierten Source-Treiberschaltung (SDIC) zuzuführen.

8. Verfahren zur Signalübertragung einer Anzeigevorrichtung nach einem der Ansprüche 1-7, die Folgendes umfasst: Bus-Niederspannungspegel-Differenzsignalleitungen (320a), Bilddaten-Leitungen (330a), ein Anzeigefeld (110), das Datenleitungen (DL), Gate-Leitungen (GL), Subpixel, die an Schnittpunkten der Datenleitungen (DL) und Gate-Leitungen (GL) angeordnet sind, aufweist, mindestens eine integrierte Source-Treiberschaltung (SDIC) zum Steuern der Subpixel über die Datenleitungen (DL) basierend auf Bilddaten, die über die Bilddaten-Leitungen (330a) empfangen worden sind, eine Steuereinrichtung (140, 900) und eine Verdrahtungsstruktur, die Zeiteinstellleitungen (310a) umfasst, wobei die Zeiteinstellleitungen (310a) eine erste Übertragungsleitung (311a), die die Steuereinrichtung (1400, 900) mit der mindestens einen integrierten Source-Treiberschaltung (SDIC) verbindet, und eine zweite Übertragungsleitung (313a), die die mindestens eine integrierte Source-Treiberschaltung (SDIC) mit der Steuereinrichtung (140, 900) verbindet, enthält;
wobei das Verfahren die folgenden Schritte enthält:
Senden (S1110) eines Synchronisierungssignals (LOCK), das das interne Taktsignal (CLK) trägt, durch die Steuereinrichtung (140, 900) über die erste Übertragungsleitung (311a) auf die mindestens eine integrierten Source-Treiberschaltung (SDIC);
Senden (S1120) von Messdaten, die auf das interne Taktsignal (CLK) synchronisiert sind, das über die erste Übertragungsleitung (311a) empfangen worden ist, über Bus-Niederspannungspegel-Differenzsignalleitungen (320a) auf die Steuereinrichtung (140, 900) durch die integrierte Source-Treiberschaltung (SDIC), wobei die Messdaten einer Eigenschaft der Subpixel entsprechen;
Empfangen des Synchronisierungssignals (LOCK), das das interne Taktsignal (CLK) trägt, durch die Steuereinrichtung (140, 900) über die zweite Übertragungsleitung (313a);
Empfangen (S1130) der Messdaten, die von der mindestens einen integrierten Source-Treiberschaltung (SDIC) gesendet worden sind, durch einen Datenempfänger (920) der Steuereinrichtung (140, 900);
Erkennen der Messdaten, die von dem Datenempfänger (920) empfangen worden sind; und
Kompensieren von Bilddaten, die zu der mindestens einen integrierten Source-Treiberschaltung (SDIC) gesendet werden sollen, durch die Steuereinrichtung (140, 900) basierend auf den empfangenen Messdaten.

## Revendications

1. Dispositif d'affichage comprenant :
des lignes de signaux différentiels de bus à basse tension (320a),
des lignes de données d'image (330a),
un panneau d'affichage (110) comprenant une pluralité de sous-pixels et une pluralité de lignes de données (DL) reliées à la pluralité de sous-pixels ;
au moins un circuit intégré de commande de source (SDIC) conçu pour entraîner les sous-pixels par l'intermédiaire des lignes de données (DL) du panneau d'affichage (110) en fonction des données d'image reçues par l'intermédiaire des lignes de données d'image (330a) ;
un dispositif de commande (140, 900) conçu pour transmettre les données d'image à l'au moins un circuit intégré de commande de source (SDIC) par l'intermédiaire des lignes de données d'image (330a) ;
une structure de câblage comprenant des lignes de réglage de temps (310a), les lignes de réglage de temps (310a) comprennent une première ligne de transmission (311a) reliant le dispositif de commande (140, 900) à l'au moins un IC de commande de source (SDIC) et une seconde ligne de transmission (313a) reliant l'au moins un IC de commande de source (SDIC) au dispositif de commande (140, 900) ;
dans lequel le dispositif de commande (140, 900) comprend :
un émetteur-récepteur de signal de verrouillage (910) conçu pour transmettre un signal de verrouillage (LOCK) transportant une horloge interne (CLK) par l'intermédiaire de la première ligne de transmission (311a) à l'au moins un circuit intégré de commande de source (SDIC) et pour recevoir le signal de verrouillage (LOCK) transportant l'horloge interne (CLK) par l'intermédiaire de la seconde ligne de transmission (313a) à partir de l'au moins un circuit intégré de commande de source (SDIC),
un récepteur de données (920) conçu pour recevoir des données de détection transmises par l'au moins un circuit intégré de commande de source (SDIC) synchronisé avec l'horloge interne (CLK) du dispositif de commande (140, 900) ; et
un compensateur (930) conçu pour reconnaître les données de détection reçues provenant du récepteur de données (920) et conçu pour effectuer un processus de compensation sur les données d'image devant être transmises à l'au moins un circuit intégré de commande de source (SDIC) en fonction des données de détection reconnues,
dans lequel l'au moins un circuit intégré de commande de source (SDIC) est conçu pour transmettre au dispositif de commande (140, 900), par l'intermédiaire des lignes de signaux différentiels de bus à basse tension (320a), les données de détection synchronisées avec l'horloge interne (CLK) reçues par l'intermédiaire de la première ligne de transmission (311a), dans lequel les données de détection correspondent à une caractéristique des sous-pixels.

2. Dispositif d'affichage selon la revendication 1, comprenant en outre : un convertisseur analogue/digital, ADC, permettant de recevoir les données de détection du sous-pixel et permettant de convertir les données de détection en des données digitales et permettant la livraison des données digitales au dispositif de commande (140, 900).

3. Dispositif d'affichage selon la revendication 2, dans lequel le sous-pixel comprend un circuit de détection permettant de détecter la caractéristique du sous-pixel et permettant d'obtenir les données de détection sous la forme d'une tension analogue de l'ADC.

4. Dispositif d'affichage selon la revendication 1, dans lequel les lignes de réglage de temps (310a) comprennent en outre des lignes de cascade (312a) transmettant le signal de verrouillage (LOCK) transportant l'horloge interne (CLK) selon un schéma en cascade entre les IC de commande de source (SDIC).

5. Dispositif d'affichage selon l'une quelconque des revendications précédentes, dans lequel un IC de commande de source (SDIC) comprend :
un émetteur-récepteur de signal de verrouillage (1010) adapté pour recevoir le signal de verrouillage (LOCK) transportant l'horloge interne (CLK) à partir d'un IC de commande de source (SDIC#k-1) précédent du groupe (G1, G2) ou provenant du dispositif de commande (140, 900),
un transmetteur de données (1020) adapté pour transmettre des données de détection synchronisées avec l'horloge interne (CLK) transportées sur le signal de verrouillage (LOCK) vers le dispositif de commande (140, 900).

6. Dispositif d'affichage selon l'une quelconque des revendications précédentes, dans lequel l'IC de commande de source (SDIC) comprend un dispositif de synchronisation (1030) conçu pour synchroniser les données digitales résultantes comprenant les données de détection générées par l'ADC vers l'horloge interne (CLK) transportées sur le signal de verrouillage (LOCK).

7. Dispositif d'affichage selon l'une quelconque des revendications précédentes, dans lequel le dispositif de commande (140, 900) est adapté pour recevoir les données de détection sous forme digitale et pour déterminer les caractéristiques spécifiques des éléments dans le sous-pixel en fonction des données de détection reçues, permettant ainsi d'obtenir une différence dans la caractéristique spécifique, afin de stocker les données de détection reçues, la caractéristique spécifique déterminée, ou des données concernant la différence obtenue dans la caractéristique spécifique d'une mémoire, dans lequel le dispositif de commande (140, 900) est adapté pour calculer une quantité de données devant être compensées (ΔData) pour chaque sous-pixel, et pour stocker la quantité calculée de données devant être compensées (ΔData) dans la mémoire et pour changer les données devant être fournies aux sous-pixels en fonction de la quantité de données devant être compensées (ΔData) pour chaque sous-pixel, et pour fournir les données modifiées devant être délivrées aux sous-pixels à l'IC de commande de source.

8. Procédé destiné à la transmission de signaux d'un dispositif d'affichage selon l'une quelconque des revendications 1 à 7, comprenant des lignes de signaux différentiels de bus à basse tension (320a), des lignes de données d'image (330a), un panneau d'affichage (110) comportant des lignes de données (DL), des lignes de grille (GL), des sous-pixels disposés au niveau des intersections des lignes de données (DL) et des lignes de grille (GL), au moins un circuit intégré de commande de source (SDIC) permettant d'entraîner les sous-pixels par l'intermédiaire des lignes de données (DL) en fonction des données d'image reçues par l'intermédiaire des lignes d'image (330a), un dispositif de commande (140, 900) et une structure de câblage comprenant des lignes de réglage de temps (310a), les lignes de réglage de temps (310a) comprennent une première ligne de transmission (311a) les reliant au dispositif de commande (140, 900) et une seconde ligne de transmission (313a) reliant l'au moins un IC de commande de source (SDIC) au dispositif de commande (140, 900) ; le procédé comprenant les étapes de :
transmission (S1110) d'un signal de verrouillage (LOCK) transportant l'horloge interne (CLK), au moyen du dispositif de commande (140, 900) à l'au moins un IC de commande de source (SDIC) par l'intermédiaire de la première ligne de transmission (311a) ;
transmission (S1120), au moyen de l'IC de commande de source (SDIC), de données de détection synchronisées avec l'horloge interne (CLK) reçues par l'intermédiaire de la première ligne de transmission (311a) vers le dispositif de commande (140, 900) par l'intermédiaire de lignes de signaux différentiels de bus à basse tension (320a), dans lequel les données de détection correspondent à une caractéristique des sous-pixels ;
réception du signal de verrouillage (LOCK) transportant l'horloge interne (CLK) au moyen du dispositif de commande (140, 900) par l'intermédiaire de la seconde ligne de transmission (313a) ;
réception (S1130), au moyen d'un receveur de données (920) du dispositif de commande (140, 900, des données de détection transmise par l'au moins un circuit intégré de commande de source (SDIC) ;
reconnaissance des données de détection reçues provenant du receveur de données (920) ; et
compensation des données d'image devant être transmises à l'au moins un circuit imprimé commande de source (SDIC) au moyen du dispositif de commande (140, 900) en fonction des données de détection reçues.
